## Europäisches Patentamt
## European Patent Office
## Office européen des brevets

(11) Publication number: **0 002 602**
A1

(12)

# EUROPEAN PATENT APPLICATION

(21) Application number: **78300797.4**

(22) Date of filing: **12.12.78**

(51) Int. Cl.²: **F 16 N 31/02**
**F 16 N 7/18, F 01 M 11/02**
**F 01 B 31/10, F 04 B 39/02**

(30) Priority: **12.12.77 GB 5171277**

(43) Date of publication of application:
**27.06.79 Bulletin 79/13**

(84) Designated contracting states:
**DE FR IT NL SE**

(71) Applicant: **F.A. HUGHES & CO LIMITED**
**Blenheim Road Longmead**
**Epsom Surrey KT19 9AL(GB)**

(72) Inventor: **Hill, David John**
**13 Godstone Road**
**Whyteleafe Surrey(GB)**

(74) Representative: **Senior, Alan Murray et al,**
**J.A. KEMP & CO 14 South Square Gray's Inn**
**London WC1R 5EU(GB)**

(54) **Rotary machine including a lubrication system.**

(57) A rotary machine including a sump in which there is a rotatable part such as a crankshaft (16) or flywheel and an upper portion in which certain parts require lubrication has a lubrication system comprising a scraper (18) terminating at one end near the rotatable part and at its other end in the upper portion. The scraper conveys lubricant to the upper portion, notably at low speed operation, thus obviating the need for a pump for this purpose.

./· · ·

Croydon Printing Company Ltd.

Fig.1

- 1 -

## DESCRIPTION

TITLE:   ROTARY MACHINE INCLUDING A LUBRICATION SYSTEM

The present invention relates to a rotary machine including a lubrication system, the machine, for example being,  a compressor or a high pressure water pump which includes a sump, in which there is a rotatable part such as a crankshaft and/or a flywheel, and an upper portion which may generally be called a "gallery" in which certain parts require lubrication.

In known rotary machines it is common to provide a gear pump to pump lubricant from the sump to the gallery, it being necessary, particularly when the machine is running at low speeds, forcibly to pump the oil into the gallery.  When the machine is operating at high speed, it is not always necessary to do this pumping, because the high speed of the crankshaft, for example, can cause sufficient splashing to lubricate the parts in the gallery.

- 2 -

According to the present invention we propose to obviate the need for such a pump by providing a scraper arranged to pick up oil from the rotatable part and cause it to flow to the upper portion at low speed operation. Thus, the crankshaft or flywheel, picks up a film of oil and this film of oil is picked up by the scraper which extends to a relatively high location in the machine, so that lubricant picked up thereby can flow into the gallery at low speed operation.

Thus the invention provides a extremely simple system for lubricating the upper part, and obviates the need for a pump for this purpose.

Although the invention is applicable to any particular form of rotary machine of this type, it has been found particularly suitable for pumps which are typically used for high pressure water jetting or other industrial uses, which pumps include a crankshaft, and crossheads in a crosshead gallery. With such a construction, in which there is usually a web on the outer rim of the crankshaft, the scraper is effective to remove a certain proportion of the film of oil on the web on the outer rim of the crankshaft which is sufficient, particularly at low speeds, to proved an abundance of oil for lubricating the gallery. As the speed goes up, the general

- 3 -

agitation within the crank case causes adequate lubrication in any event.

Although reference has been made to a single scraper, it is contemplated that more than one scraper could be employed. The scraper is advantageously of a channel section so that it can adequately direct the oil scraped off to the zone in the gallery where it is required. In one particular construction, the scraper is in the form of a piece of sheet material having a flat central portion, and two upstanding walls, to provide a channel section, the two walls each having an outwardly extending flange. The walls do not extend along the full length of the sheet material but finish a short distance from one end. At this end there is provided a slot, for the passage of a securing screw so that the scraper can be adjusted, to increase or decrease the flow of oil.

In order that the invention may more readily be understood, the following description is given, merely by way of example, reference being made to the accompany drawings, in which:-

Figure 1 is a cross-section, in a transverse to the axis plane, of one embodiment of machine incorporating the lubrication system of the invention; and

- 4 -

Figure 2 is a plan view of the scraper used in the machine of Figure 1, and;

Figure 3 is a side view of an alternative form of scraper.

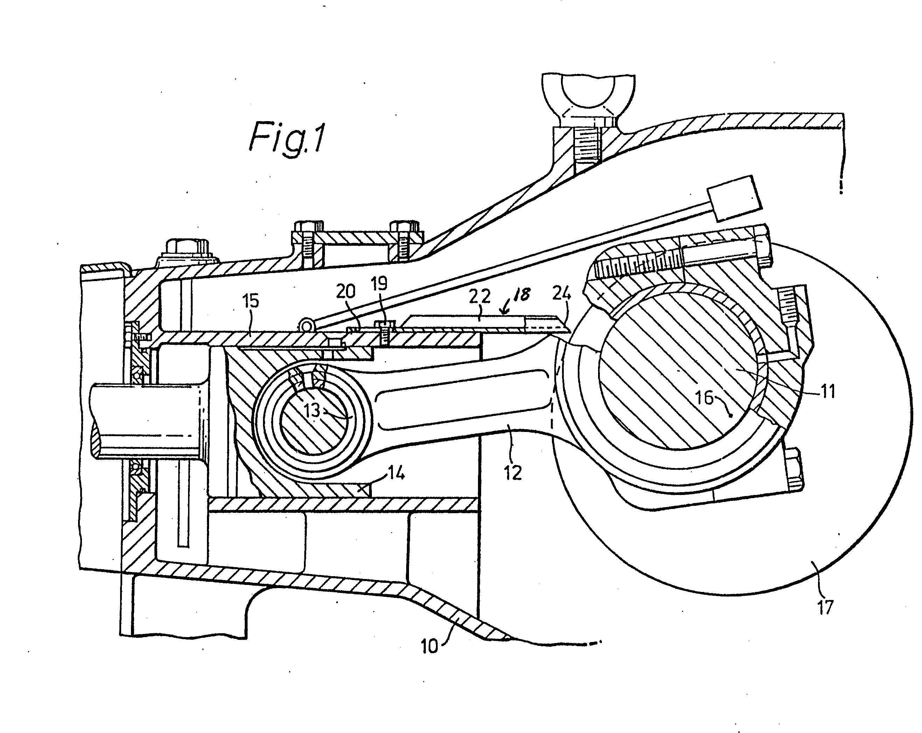

Referring to the construction illustrated in Figure 1, the machine shown therein is in the form of a pump which is typically used for providing high pressure water for water jetting or other industrial use. The pump includes a crankcase 10, a crankshaft 11, having a number of piston rods 12, the gudgeon pins 13 thereof connected in a conventional manner to pistons 14. The pistons 14 are reciprocable in a cylinder 15 and it is the outside surface of this cylinder 15 which forms the gallery which is to be lubricated by the arrangement of the invention.

It will be noted that the axis of rotation of the crankshaft has been indicated by the point 16. The crankshaft has mounted thereon a circular web 17 which can serve as a flywheel this web 17 being centred about the axis of rotation 16 of the crankshaft.

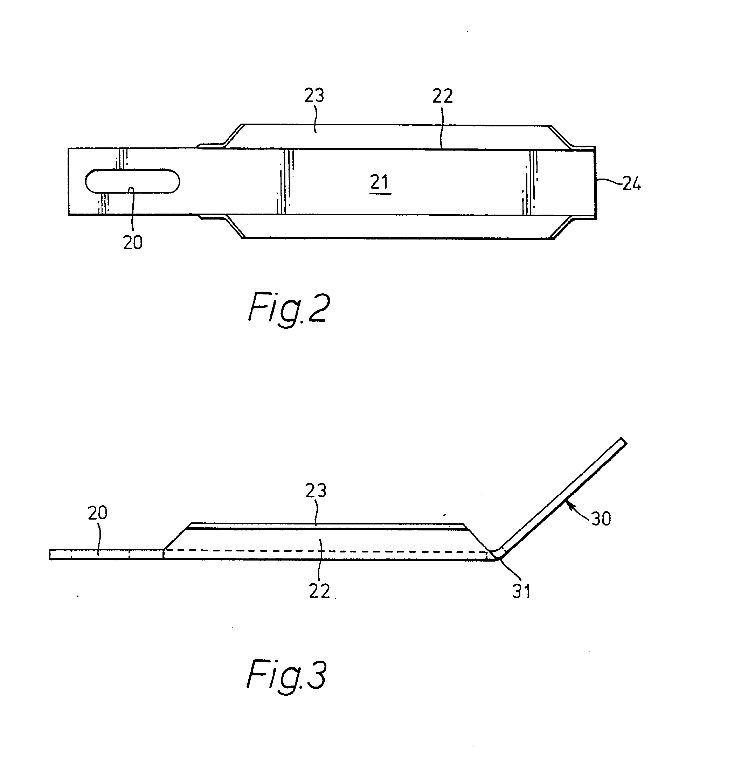

Mounted on the outer surface of the cylinder 15 is a scraper 18, the righthand end of which, as indicated in Figure 1 engages or is very slightly spaced from the surface of the web 17. In order to secure the scraper 18 in position, a bolt 19 is provided, this bolt passing through a slot 20 (Figure 2) in the scraper.

As can be seen from Figure 2, the scraper is formed of sheet material and includes a central portion 21, and two upstanding side walls 22 provided with an outwardly extending flange 23, so that the whole assembly has a flattened "top-hat" section. The portion on the lefthand end, as viewed in Figure 2 of the scraper, extends beyond the side walls 22 and it is this portion which has the slot 20 formed therein.

It will be appreciated that this slot allows one to adjust the position of the scraper so that its righthand tip 24 is located the desired distance from the web 17.

When the machine is rotating at a relatively low speed, in the anticlockwise direction as viewed in Figure 1, the scraper serves to pick up some of the film of oil which collects on the web 17. The oil runs along the channel section to the left and serves to lubricate the crossheads in the gallery surrounding the cylinder 15.

This arrangement will also function to pick up and transmit oil if the machine should be run in the clockwise direction, but a still better effect is achieved in this respect if a slightly modified form of scraper is employed. Such a modified scraper is shown in side view in Figure 3, and will be seen to be the same as that of Figure 2 except that it has a bent end part 30 which in use extends generally tangentially to the web 17.

Just at the bend when part 30 joins the main part of the scraper there is a through hole 31 through which the oil is picked up whichever the direction of rotation.

If desired more than one web can be provided, preferably two, these being at axially spaced locations along the crankshaft.

- 1 -

CLAIMS

1.    A rotary machine including a sump in which there is a rotatable part and an upper portion in which certain parts require lubricating and characterised by a lubrication system comprising a scraper (18) so arranged as to pick up oil from the rotatable part (16, 17) and cause it to flow to the upper portion at low speed operation.

2.    A machine according to claim 1 characterised in that the rotatable part is a crankshaft (16).

3.    A machine according to claim 2 characterised in that the rotatable part is a disc (17) mounted on the crankshaft.

4.    A machine according to claim 2 characterised in that the rotatable part is a flywheel.

5.    A machine according to any preceding claim characterised in that the scraper (18) is channel shaped over at least part of its length.

6.    A machine according to claim 5 characterised in that the scraper is defined, over at least part of its length, by a piece of sheet material having a flat central portion (21) and two upstanding walls (22).

7.    A machine according to any preceding claim characterised in that the scraper (18) extends towards the rotatable part from the outside of a cylinder (15).

8.    A machine according to any preceding claim characterised in that the scraper has an extension (30) which is substantially tangential to the rotatable part (16, 17) and has a through hole (31) in the region where the extension joins the main part of the scraper.

Fig.1

_2/2_

**Fig.2**

**Fig.3**

0002602

<table>
<tr><td colspan="2"></td><td></td><td>EUROPEAN SEARCH REPORT</td><td>Application number</td></tr>
</table>

**European Patent Office**

**EUROPEAN SEARCH REPORT**

Application number

EP 78 30 0797

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | DE - C - 356 650 (GRUTZNER) <br> * Page 2, lines 32-59; figures 1,2 * | 1,2,3, 5,6,7 | F 16 N 31/02 <br> 7/18 <br> F 01 M 11/02 <br> F 01 B 31/10 <br> F 04 B 39/02 |
| | -- | | |
| | CH - A - 243 431 (LANZ) <br> * Page 2, lines 16-58 * | 1,5,6, 7 | |
| | -- | | |
| | DE - C - 174 028 (FAULHABER) <br> * Page 2, lines 34-40 * | 1,3 | |
| | -- | | TECHNICAL FIELDS SEARCHED (Int.Cl.²) |
| | GB - A - 14 792/1912 (BAKER) <br> * Page 1, lines 34-42; page 2, lines 1-7 * | 1,4,7 | F 16 N 7 <br> 31 <br> F 01 B 31 <br> F 04 B 39 <br> F 01 M 11 |
| | -- | | |
| | GB - A - 1 191 790 (C. HURTH MA- SCHINEN- UND ZAHNRADFABRIK) <br> * Page 2, lines 27-45 * | 1,5,6 | |
| | -- | | |
| | US - A - 1 971 781 (HENDERSON) <br> * Page 2, lines 8-23 * | 1,5,6 | |
| | -- | | CATEGORY OF CITED DOCUMENTS |
| | GB - A - 691 726 (EATON AXLES) <br> * Page 2, lines 53-102 * | 1,3,8 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | -- | | |
| A | GB - A - 241 937 (BENEDETTI) | 1,3 | |
| | -- | | |
| | ./. | | &: member of the same patent family, corresponding document |

| The present search report has been drawn up for all claims | | |
|---|---|---|
| Place of search <br> The Hague | Date of completion of the search <br> 15-03-1979 | Examiner <br> LAMMINEUR |

EPO Form 1503.1 06.78

0002602

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| A | GB - A - 287 831 (SULZER) | 1,4 | |
| A | GB - A - 658 014 (FISCHER) | 1 | |
| A | FR - A - 535 040 (BARY) | 1 | |
| A | US - A - 3 383 937 (TOENNE) | 1 | |
| | ---- | | TECHNICAL FIELDS SEARCHED (Int. Cl.²) |